# EUROPÄISCHE PATENTSCHRIFT

(11) **EP 2 526 442 B1**
(45) Veröffentlichungstag und Bekanntmachung des Hinweises auf die Patenterteilung: **06.07.2016**
(21) Anmeldenummer: 11711246.6
(22) Anmeldetag: 21.01.2011
(51) Int. Cl.: G01S 5/02, G01S 19/17

(54) **SATELLITENBASIERTE SAR-DIENSTE**
SATELLITE BASED SAR SERVICES
SERVICES SAR BASÉS SUR SATELLITES

(30) Priorität: 22.01.2010 DE 102010005582
(43) Veröffentlichungstag der Anmeldung: 28.11.2012
(73) Patentinhaber: Airbus DS GmbH, 82024 Taufkirchen (DE)
(72) Erfinder: TRAUTENBERG, Hans L., 50823 Köln (DE)
(74) Vertreter: Häußler, Henrik
(86) Internationale Anmeldenummer: PCT/DE2011/000061
(87) Internationale Veröffentlichungsnummer: WO 2011/088824

(56) Entgegenhaltungen:
- WO-A1-01/78032
- WO-A1-2006/122416
- GB-A- 2 430 062
- GB-A- 2 452 386
- GB-A- 2 470 376
- US-A- 5 552 772
- US-A- 6 157 896
- US-A1- 2003 130 771

## Beschreibung

Die Erfindung betrifft ein Satellitenbasiertes SAR-System gemäß Anspruch 1 und einen Notrufsender für ein derartiges SAR-System gemäß Anspruch 7.

Ein typisches Satellitenbasiertes System zur Unterstützung von Such- und Rettungsdiensten SAR (Search and Rescue) ist das COSPAS/SARSAT-System, das Ortung auf Doppler-Basis und einen Notfunk bietet. Im COSPAS/SARSAT-System werden Notrufsignale, die von Notrufsendern auf den internationalen Notruffrequenzen 121,5 MHz, 243 MHz und 406 MHz übertragen werden, über an Bord von Satelliten befindlichen speziellen Transpondern an Bodenstationen LUT (Local User Terminal) weitergeleitet, die empfangene Notrufsignale und die darin enthaltenen Daten an ein Kontrollzentrum MCC (Mission Control Center) übertragen, das Rettungsmaßnahmen festlegt, die von einem Rettungskoordinierungszentrum RCC (Rescue Coordination Center) vollzogen werden. Als Träger für die Transpondern werden Satelliten werden LEO (Low Earth Orbit)-Satelliten und GEO (Geostationary Earth Orbit)-Satelliten genutzt. In das COSPAS/SARSAT-System sollen auch Satelliten des zukünftigen europäischen Satellitennavigationssystems Galileo einbezogen werden, um eine noch bessere Aufnahme von Notrufen gewährleisten zu können.

In seiner neuesten Ausprägung übermittelt ein Notrufsender auch durch NAVSTAR-GPS ermittelte Positionsdaten eines in Not befindlichen Senders, beispielsweise eines Flugzeugs, Schiffes oder einer Person an die Bodenstationen LUT des COSPAS/SARSAT-Systems. Hierdurch kann die Lokalisierung des in Not befindlichen Senders gegenüber der herkömmlichen auf Doppler-Basis durchgeführten Ortung verbessert werden. Allerdings setzt dies voraus, dass der Notrufsender nach dem Auslösen eines Notrufs noch funktioniert und eine Verbindung zu den Satelliten des COSPAS/SARSAT-Systems aufgebaut werden kann, was beispielsweise bei vielen Abstürzen von kleinen Flugzeugen nicht der Fall ist, da diese häufig in so ungünstigem Gelände liegen, dass die Satelliten nicht mehr kontaktiert werden können. Dieser Mangel wird durch von dem kanadischen Unternehmen SPOT Inc. Kürzlich auf den Markt gebrachten sogenannten SPOT (Satellite Personal Tracker) Messenger teilweise überwunden. Ein aktivierter SPOT Messenger übermittelt in einem speziellen Betriebszustand etwa alle 10 Minuten seine mittels NAVSTAR-GPS ermittelte aktuelle Position an eine Datenbankanwendung, die diese Positionen für autorisiere Benutzer über ein Webinterface zugänglich macht.. Doch der Zeitraum von etwa 10 Minuten zwischen den Übertragungen der Position des SPOT Satellite Messenger und die geringe Zuverlässigkeit der einzelnen Übertragungen kann dazu führen, dass die tatsächlichen Zeitabstände zwischen den in der Datenbankanwendung bekannten Positionen und somit auch der Suchbereich im Notfall sehr groß werden. Eine Suchaktion wird bisher dadurch ausgelöst, dass entweder der Nutzer am SPOT Notrufgerät den Notrufknopf drückt, oder ein autorisierter Nutzer der Datenbankanwendung nach Überfälligkeit des Flugzeugs die letzte in der Datenbankanwendung gespeicherte Position an den Such- und Rettungsdienst übermittelt. In vielen Fällen wird der Notrufsender beim Absturz inoperabel, sodass dieser zweite Weg häufig notwendig wäre, doch nur dann beschritten werden kann, wenn eine autorisierte Person von der Überfälligkeit des Flugzeuges ausgeht, was häufig erst Stunden nach dem Unfall der Fall ist.

Die GB 2 430 062 A, die zur Abgrenzung in der zweiteiligen Form verwendet wird, beschreibt einen Satelliten-gestützten SAR-Dienst, bei dem ähnlich wie beim vorgenannten SPOT-Dienst in vorgegebenen Zeitabständen von 5 Minuten bis 3 Stunden, typischerweise 1 Stunde Positionsmeldungen eines Schiffs über einen Satelliten an eine Kontrollstation übermittelt werden. Bei Ausbleiben einer Positionsmeldung, wird von der Kontrollstation eine Anforderungs-Nachricht an den Sender auf dem Schiff übertragen, um eine weitere Positionsnachricht anzufordern. Bleiben trotz mehrerer Anforderungs-Nachrichten Positionsmeldungen vom Schiff aus, wird automatisch ein Alarm aktiviert, ein Telefonanruf an ein Mobiltelefon des Schiffs initiiert oder nach Überprüfen der letzten Positionsmeldung des Schiffs auf eine mögliche Notsituation ein Rettungsdienst benachrichtigt.

Aufgabe der vorliegenden Erfindung ist es nun, Satellitenbasierte SAR-Dienste weiter zu verbessern, insbesondere um einen kleineren Suchbereich im Notfall zu erhalten.

Diese Aufgabe wird durch ein Satellitenbasiertes SAR-System mit den Merkmalen von Anspruch 1 und einen Notrufsender für ein derartiges SAR-System mit den Merkmalen von Anspruch 7 gelöst. Weitere Ausgestaltungen der Erfindung sind Gegenstand der abhängigen Ansprüche.

Ein wesentlicher Gedanke der Erfindung besteht darin, dass ein Notrufsender seine Position an einen Satelliten zu einer vorgegebenen Zeit meldet, die abhängig vom Orbit und der Position des Satelliten und der eigenen Position des Notrufsenders berechnet wird, und das SAR-System beim Ausbleiben von Positionsmeldungen eines Notrufsenders insbesondere innerhalb einer vorgegebenen Zeit nach Empfang der letzten Positionsmeldung eine Rettungsaktion initiiert, wenn der Notrufsender nicht vom SAR-System abgemeldet ist. Damit kann zum einen der Suchbereich im Notfall auf einen relativ kleinen Bereich beschränkt werden. Zum anderen funktioniert eine Alarmierung auch dann, wenn der Notrufsender zerstört wurde, wodurch sich die Sicherheit mit dem erfindungsgemäßen SAR-System wesentlich verbessern lässt.

Gemäß einer Ausführungsform betrifft die Erfindung ein Satellitenbasiertes SAR-System mit einem Raumsegment mit mehreren Satelliten und einem Bodensegment mit einer oder mehreren Bodenstationen, wobei
ein Satellit eine Positionsmeldung von einem Notrufsender in seinem Dienstgebiet empfängt und an eine Bodenstation weiterleitet, insbesondere die jeweils letzte gemeldete Position und Zeit des Notrufsenders so lange speichert, bis er sie an eine Bodenstation weiterleiten kann,
die Bodenstation die mit der letzten Positionsmeldung empfangene Position des Notrufsenders in einem Verwaltungssystem für Notrufsender speichert,
der Notrufsender Positionsmeldungen an den Satelliten derart absendet, dass der Empfang von Positionsmeldungen am Satelliten so koordiniert ist, dass zu jedem Zeitpunkt nur Positionsmeldungen ankommen, die hinsichtlich ihrer Signalparameter so unterschiedlich sind, dass ein gleichzeitiger Empfang möglich ist, und
eine Rettungsaktion für den Notrufsender initiiert wird, wenn keine Abschaltnachricht vom Notrufsender empfangen wurde und keine Positionsmeldung vom Notrufsender innerhalb eines vorgegebenen Zeitraums empfangen wird.

Weiterhin kann eine Datennachricht mit dem erwarteten Zeitpunkt, zu dem die nächste Positionsmeldung vom Notrufsender an einem Satelliten empfangen werden soll, an den Notrufsender und/oder eine Datennachricht mit mindestens einem Parameter für einen Algorithmus, nach dem einzelne Notrufsender die geplanten Empfangszeitpunkte ihrer Nachrichten am Satelliten und die dazu zu verwendenden Signalparameter berechnen können, gleichzeitig an eine Vielzahl von Notrufsendern im Dienstgebiet übertragen werden, und
der Notrufsender kann anhand der in der empfangenen Datennachricht enthaltenen Informationen die Position des Satelliten ermitteln und mit der Position des Satelliten und seiner eigenen Position berechnen, wann die nächste Positionsmeldung an den Satelliten derart abzusenden ist, dass sie zum erwarteten Zeitpunkt vom Satelliten empfangen wird.

Die Datennachricht kann vom Satelliten nach Empfang der Positionsmeldung vom Notrufsender oder auch über ein anderes Medium übertragen werden. Der Notrufsender kann den Orbit eines Satelliten anhand von Dopplermessungen von Signalen des Satelliten bestimmen und für die Ermittlung der Position des Satelliten verwenden. Alternativ kann auch der Orbit mit der Datennachricht an den Notrufsender übertragen werden, so dass der Notrufsender nicht selbst den Orbit ermitteln muss.

Ein Notrufsender kann zum Abschalten eine Abschaltnachricht an das Raumsegment senden, und nach Empfangen der Abschaltnachricht kann die Ausbuchung des Notrufsenders aus dem Verwaltungssystem initiiert und nach dem Ausbuchen eine Ausbuchungsnachricht über das Raumsegment an den Notrufsender übermittelt werden, der sich nach Empfangen dieser Nachricht abschaltet.

In einer Datennachricht kann ferner eine vorgegebene Kodierung enthalten sein, mit der die nächste Positionsmeldung vom Notrufsender empfangen werden soll, wobei die vorgegeben Kodierung insbesondere eine vorgegebene Frequenz, eine vorgegebene Modulation und/oder einen vorgegebenen Nachrichteninhalt aufweist.

Der in einer Datennachricht enthaltene erwartete Zeitpunkt kann derart bestimmt sein, dass der die Datennachricht versendende Satellit zum erwarteten Zeitpunkt noch in Empfangsreichweite des Notrufsenders ist.

Die zeitliche Differenz zwischen dem Aussendezeitpunkt einer Datennachricht und dem in der Datennachricht enthaltenen erwarteten Zeitpunkt kann höchstens etwa 5 Minuten betragen, insbesondere kleiner als 5 Minuten sein.

Das Initiieren einer Rettungsaktion für einen Notrufsender kann das Übermitteln einer Rettungsnachricht vom Verwaltungssystem an ein Rettungs-Koordinierungszentrum in der Nähe der letzten im Verwaltungssystem gespeicherten Position des Notrufsenders aufweisen.

In einer weiteren Ausführungsform betrifft die Erfindung einen Notrufsender für ein Satellitenbasiertes SAR-System gemäß der Erfindung und wie vorstehend beschrieben, mit
einem Transceiver zum Senden und Empfangen von Nachrichten an bzw. von Satelliten des Raumsegments des SAR-Systems,
einer Positionsermittlungseinheit zum Ermitteln der aktuellen Position des Notrufsendern, und
einer Steuereinheit zum Erzeugen und Versenden von Positionsmeldungen über den Transceiver und Empfangen und Verarbeiten von Datennachrichten an bzw. von Satelliten des Raumsegments des SAR-Systems.

Die Positionsermittlungseinheit kann einen Empfänger für Navigationssignale eines Satellitennavigationssystems und einen Prozessor zum Berechnen der aktuellen Position aus empfangen Navigationssignalen aufweisen.

Die Steuereinheit kann derart ausgebildet sein, dass sie anhand der in einer empfangenen Datennachricht enthaltenen Informationen die Position des Satelliten ermittelt, der die Datennachricht versendet hat, und mit der Position des Satelliten und der aktuellen Position des Notrufsender berechnet, wann die nächste Positionsmeldung an den Satelliten abzusenden ist, und zum berechneten Zeitpunkt die nächste Positionsmeldung mit der dann aktuellen Position des Notrufsenders an den Satelliten über den Transceiver aussendet.

Die Steuereinheit kann ferner derart ausgebildet sein, dass sie anhand der in einer empfangenen Datennachricht enthaltenen vorgegeben Kodierung, mit der die nächste Positionsmeldung vom Notrufsender empfangen werden soll, steuert, wie die nächste Positionsmeldung an einen Satelliten versendet wird, wobei die vorgegeben Kodierung insbesondere eine vorgegebene Frequenz, eine vorgegebene Modulation und/oder einen vorgegebenen Nachrichteninhalt aufweist und die Steuereinheit die Frequenz, Modulation bzw. den Nachrichteninhalt der zu versendenden nächsten Positionsmeldung entsprechend der Vorgabe steuert.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in
Fig. 1 ein Ausführungsbeispiel eines Satellitenbasierten SAR-Systems gemäß der Erfindung und
Fig. 2 ein Blockschaltbild eines Ausführungsbeispiels eines Notrufsenders gemäß der Erfindung.

In der folgenden Beschreibung können gleiche, funktional gleiche und funktional zusammenhängende Elemente mit den gleichen Bezugszeichen versehen sein. Absolute Werte sind im Folgenden nur beispielhaft angegeben und sind nicht als die Erfindung einschränkend zu verstehen.

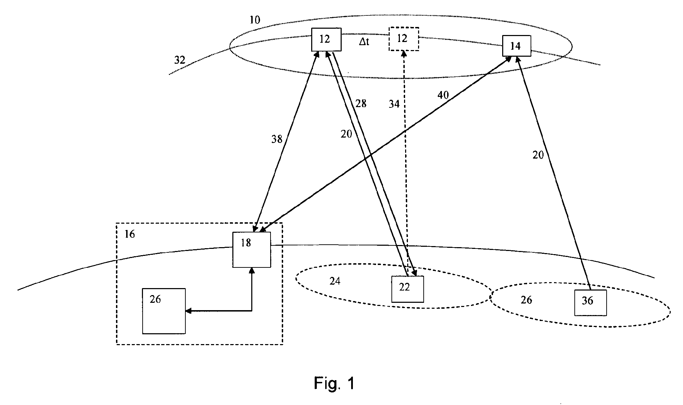

In Fig. 1 ist eine Konstellation eines Satellitenbasierten SAR-Systems dargestellt, das ein Raumsegment 10 und ein Bodensegment 16 aufweist. Das Raumsegment beinhaltet mehrere Satelliten, von denen ein erster Satellit 12 und ein zweiter Satellit 14 dargestellt sind, die auf einem Orbit 32, beispielsweise einem LEO die Erde umkreisen. Jeder der beiden Satelliten 12 und 14 besitzen jeweils ein eigenes Dienstgebiet 24 bzw. 26, das durch den Ausleuchtungsbereich des jeweiligen Satelliten definiert ist. Im Dienstgebiet kann der entsprechende Satellit Funksignale von Notrufsendern empfangen. Außerdem sind vom Satelliten ausgesendete Funksignale in seinem Dienstgebiet empfangbar. Die Dienstgebiete von Satelliten können überlappen.

Jeder Satellit 12 und 14 besitzt jeweils einen Transponder, der Signale bzw. Meldungen von Notrufsendern and das Bodensegment 16 des SAR-Systems weiterleitet und Signale bzw. Meldungen bzw. Nachrichten vom Bodensegment 16 an Notrufsender weiterleitet. Mit dem Transponder kann also jeder Satellit 12 und 14 nicht nur eine bidirektionale Kommunikation mit Notrufsendern 22 bzw. 36 führen, sondern auch jeweils eine bidirektionale Kommunikationsverbindung 38 bzw. 40 mit einer Bodenstation 18 des Bodensegments 16 aufbauen. Zudem kann jeder Satellit die Fähigkeit besitzen, von Notrufsendern empfangene Positionsmeldungen zu speichern, bis der Satellit wieder in Kontakt mit einer Bodenstation ist, und dann gespeicherte Positionsmeldungen an die Bodenstation übertragen.

Das Bodensegment weist in der Regel mehrere über ein bestimmtes Gebiet verteilte Bodenstationen auf. Die Bodenstationen sind mit einem Verwaltungssystem 26 für Notrufsender kommunikationsmäßig verbunden. Das Verwaltungssystem 26 verwaltet alle in das SAR-System eingebuchten Notrufsender. Einbuchen bedeutet, dass ein Notrufsender im SAR-System registriert ist und verfolgt wird. Wenn ein Notrufsender nicht weiter verfolgt werden kann, d.h. keine Positionsmeldungen des Notrufsenders mehr vom SAR-System empfangen werden, wird automatisch eine Rettungsaktion für den Notrufsender initiiert, indem das Verwaltungssystem 26 automatisch eine entsprechende Nachricht mit der letzten gespeicherten Position des Notrufsenders, dem Empfangszeitpunkt der letzten Positionsmeldung vom Notrufsender und dessen Kennung generiert und an ein Rettungskoordinierungszentrum RCC übermittelt, das daraufhin eine Rettungsaktion im Bereich der letzten gespeicherten Position des Notrufsenders einleiten kann.

Gemäß der vorliegenden Erfindung muss ein Notruf nicht aktiv von einem Notrufsender ausgelöst werden; stattdessen wird unter bestimmten Voraussetzungen vom SAR-System eine Rettungsaktion automatisch initiiert, wie im Folgenden beispielhaft erläutert wird: von einem im SAR-System eingebuchten Notrufsender 22 wird erwartet, dass dieser periodisch Positionsmeldungen 20 an den Satelliten 12, in dessen Dienstgebiet 24 er sich befindet, sendet. Hierbei sind Notrufsender derart ausgebildet, dass sie ihre Signale bzw. Positionsmeldungen bzw. Nachrichten so absenden, dass der Empfang an einem Satelliten so koordiniert ist, dass zu jedem Zeitpunkt nur Signale ankommen, die hinsichtlich ihrer Signalparameter so unterschiedlich sind, dass ein gleichzeitiger Empfang möglich ist. Insbesondere sind die Zeitpunkte des Empfangs von Positionsmeldungen am Satelliten 12 durch den Orbit 32 festgelegt. Weiterhin können weitere Parameter für die Positionsmeldungen wie die Kodierung einer Positionsmeldung vom SAR-System vorgegeben werden, beispielsweise eine vorgegebene Frequenz für die Übertragung der Positionsmeldung, eine vorgegebene Modulation und/oder einen vorgegebenen Nachrichteninhalt.

Wenn die Nachrichten nicht mehr beim Satelliten 12 sondern bei einem anderen Satelliten (zum Beispiel 14) ankommen, wird natürlich keine Rettungsaktion initiiert.

Eine Positionsmeldung 20 des Notrufsenders 22 enthält eine im SAR-System eindeutige Kennung des Notrufsenders 22 und dessen aktuelle Positionsdaten, die vom Notrufsender 22 mittels eines Empfängers für Navigationssignale eines Satellitennavigationssystems wie beispielsweise GPS, GLONASS und/oder Galileo ermittelt werden können. Zusätzlich oder alternativ kann der Notrufsender 22 auch ein Inertial-Navigationssystem (INS) aufweisen, mit dem beispielsweise die aktuelle Position auch bei schlechtem, gestörtem oder überhaupt keinem Empfang von Navigationssignalen eines Satellitennavigationssystems ermittelt werden kann.

Die Positionsmeldung 20 wird vom Notrufsender 22 zu einem genau berechneten Zeitpunkt ausgesendet, damit die Meldung 20 zu einem bereits erwähnten festgelegten Zeitpunkt am Satelliten 12 eintrifft. Der Sendezeitpunkt wird aus einem erwarten Zeitpunkt des Empfangs der nächsten Positionsmeldung am Satelliten 12 und dem Orbit 32 berechnet. Den erwarteten Empfangszeitpunkt und den Orbit erhält der Notrufsender 22 durch eine Datennachricht 28 des Satelliten 12, die dieser als Antwort auf eine empfangene Positionsmeldung an den Notrufsender 22 zurücksendet. Der in der Datennachricht 28 enthaltene erwartete Zeitpunkt ist vor allem derart bestimmt, dass der die Datennachricht versendende Satellit 12 zum erwarteten Zeitpunkt noch in Empfangsreichweite des Notrufsenders ist. Hierzu kann der Satellit 12 anhand seines Orbits einen geeigneten erwarteten Empfangszeitpunkt berechnen und vorgeben. Beispielsweise kann der Satellit 12 anhand der aktuelle Position des Notrufsender 22 und seines Orbits 32 berechnen, wann etwa der Empfang von Meldungen vom Notrufsender 22 nicht mehr möglich ist und einen entsprechend bemessenen erwarteten Empfangszeitpunkt vorgeben. Bei der Vorgabe des erwarteten Empfangszeitpunkts wird zudem berücksichtigt, dass die zeitliche Differenz zwischen dem Aussendezeitpunkt einer Datennachricht und dem in der Datennachricht enthaltenen erwarteten Zeitpunkt höchstens etwa 5 Minuten beträgt, insbesondere kleiner als 5 Minuten ist, so dass mit einer relativ hohen Frequenz Positionsmeldungen vom Notrufsender 22 erhalten werden und der Suchradius im Notfall relativ klein ausfällt. Anhand des mit der Datennachricht 28 vom Satelliten 12 empfangenen Orbits 32 und des erwarteten Empfangszeitpunkts kann der Notrufsender 22 dann berechnen, wann genau die nächste Positionsmeldung 34 ausgesendet werden muss, damit sie zum erwarteten Zeitpunkt vom Satelliten 12 empfangen wird, der sich mitterweile an einer neuen Position des Orbits 32 befindet, wie in Fig. 1 durch den gestrichelt gezeichneten Satelliten 12 dargestellt ist.

Der Satellit 12 leitet die empfangene Positionsmeldung 20 mit dem Empfangszeitpunkt über die Kommunikationsverbindung 38 mit der Bodenstation 18 an diese weiter. Die Bodenstation 38 übermittelt die empfangenen Daten an das Verwaltungssystem 26, das die Positionsdaten speichert. Weiterhin überwacht das Verwaltungssystem den Zeitverlauf des Empfangs von Positionsmeldungen von jedem eingebuchten Notrufsender. Hierzu überwacht das Verwaltungssystem 26 für jeden Notrufsender die seit dem Empfang der letzten Positionsmeldung verstrichene Zeit. Für jeden im SAR-System eingebuchten Notrufsender kann eine eigene Maximalzeit vorgegeben sein, ab der ein automatischer Alarm erzeugt wird. Das Verwaltungssystem 26 überwacht die vorgegebenen Maximalzeiten und erzeugt beim Überschreiten einer Maximalzeit automatisch für den entsprechenden Notrufsender die bereits oben erwähnte Nachricht und übermittelt diese an ein Rettungskoordinierungszentrum RCC, um eine Rettungsaktion zu initiieren. Wenn das Verwaltungssystem 26 eine Positionsmeldung 20 vom Notrufsender 22 mit dem Empfangszeitpunkt am Satelliten 12 empfängt, wird die Überwachung für diesen Notrufsender 22 zurückgesetzt bzw. ein Timer neu gestartet. Somit ist sichergestellt, dass trotz des Empfangs der Positionsmeldung 20 vom Notrufsender 22 keine Rettungsaktion initiiert wird.

Die Überwachung kann im Prinzip auch im Satelliten 12 stattfinden, wodurch die Datenübermittlung zwischen Satellit 12 und Bodensegment 16 reduziert werden kann. Das Verwaltungssystem 26 könnte auch im Satelliten 12 untergebracht sein, beispielsweise in Form eines Verwaltungsrechners, und der Satellit 12 könnte derart ausgebildet sein, dass er beispielsweise autonom alle im seinem Dienstgebiet 24 befindlichen und gebuchten Notrufsender 22 überwacht und bei Ausbleiben einer Positionsmeldung zum erwarteten Zeitpunkt automatisch eine Rettungsaktion für diesen Notrufsender durch Übermitteln einer entsprechenden Nachricht an das Bodensegment 16 initiiert. Eine derartige Implementierung kann vor allem dann sinnvoll sein, wenn sich der Satellit 12 auf einem GEO befindet und ein relativ großes gleichbleibendes Dienstgebiet 24 besitzt, beispielsweise das Territorium eines Staates oder ein größeres Naturschutzgebiet.

Um zu vermeiden, dass bei einem absichtlich ausgeschalteten Notrufsender eine Rettungsaktion initiiert wird, sollte sich ein Notrufsender vor dem Abschalten aus dem SAR-System ausbuchen. Hierzu sendet ein Notrufsender eine Abschaltnachricht an einen Satelliten des Raumsegments. Der Satellit kann die Abschaltnachricht an das Bodensegment weiterleiten, so dass das Verwaltungssystem den Notrufsender aus dem SAR-System ausbucht. Nach erfolgreichem Ausbuchen sendet das Bodensegment eine Bestätigung des Ausbuchens an den Satelliten, der sie an den Notrufsender übermittelt, der sich nach Empfangen dieser Nachricht abschalten kann. Somit wird der Notrufsender aus dem SAR-System ausgebucht und aus der Überwachung entfernt, so dass bei ausbleibenden Positionsmeldungen keine Rettungsaktion mehr für diesen Sender initiiert werden muss.

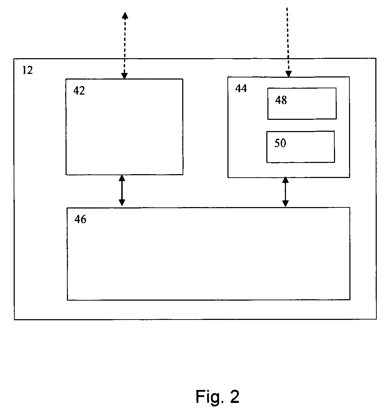

Fig. 2 zeigt ein Blockschaltbild eines Notrufsenders 22 mit einem Transceiver 42 zur Kommunikation mit einem Satelliten eines SAR-Systems, einer Positionsermittlungseinheit 44, beispielsweise einem GPS-Empfänger, zum Ermitteln der aktuellen Position des Notrufsenders 22, und einer Steuereinheit 46, beispielsweise in Form eines Prozessors, der ein in einem Speicher abgelegtes Programm (Firmware) zum Verarbeiten der Positionsdaten von der Positionsermittlungseinheit 44 und zum Steuern des Transceivers 42 ausführt.

Die Firmware konfiguriert den Prozessor der Steuereinheit 46 derart, dass die von der Positionsermittlungseinheit 44 ermittelten aktuellen Positionsdaten zusammen mit einer eindeutigen Kennung, beispielsweise einer Seriennummer oder einem digitalen Zertifikat des Notrufsenders 22, in eine Positionsmeldung integriert werden, die von der Steuereinheit 46 an den Transceiver 42 übergeben wird, der ferner von der Steuereinheit 46 derart angesteuert wird, dass er die Positionsmeldung auf einer bestimmten Trägerfrequenz mit einer bestimmten Modulation an einen Satelliten des SAR-Systems überträgt. Die Trägerfrequenz und die Modulation können hierbei beispielsweise abhängig vom zu verwendenden SAR-System, von der Region, in der sich der Notrufsender aktuelle befindet, und natürlich weiteren systembedingten Parametern vorgegeben sein.

Nach dem Aussenden der Positionsmeldung konfiguriert die Firmware den Prozessor derart, dass die Steuereinheit 46 den Transceiver 42 zum Empfangen von Datennachrichten von Satelliten des SAR-Systems einstellt. Sobald eine Datennachricht vom Transceiver 42 empfangen wird, übermittelt dieser die Datennachricht an den Prozessor der Steuereinheit 46, der die in der empfangenen Datennachricht enthaltenen Informationen extrahiert. Insbesondere anhand des in der Datennachricht enthaltenen erwarteten Empfangszeitpunkts für die nächste Positionsmeldung und des Orbits des Satelliten berechnet der Prozessor einen geeigneten Sendezeitpunkt für die nächste Positionsmeldung. Weiterhin wertet der Prozessor die in der empfangenen Datennachricht enthaltenen Informationen zur Kodierung der nächsten Positionsmeldung derart aus, dass es den Transceiver in einen entsprechenden Sendemodus versetzt. Schließlich wartet der Prozessor bis kurz vor dem berechneten Sendezeitpunkt, fragt von der Positionsermittlungseinheit 44 die aktuellen Positionsdaten ab, generiert eine Positionsmeldung wie oben bereits beschrieben und übermittelt diese an den Transceiver 42 zum Aussenden, so dass der Transceiver 42 die Positionsmeldung genau zum berechneten Sendezeitpunkt aussendet.

Die Firmware konfiguriert den Prozessor auch derart, dass beispielsweise bei Betätigung eines Schalters des Notrufsenders eine Abschaltnachricht generiert wird, die über den Transceiver an das SAR-System übertragen wird, und der Notrufsender erst abgeschaltet wird, wenn eine Ausbuchungsnachricht über den Transceiver vom SAR-System empfangen wird.

Der Notrufsender kann als batteriebetriebenes Gerät für den mobilen Betrieb und die Benutzung beispielsweise im unwegsamen Gelände oder auch als stationäres Gerät, das beispielsweise in insbesondere kleineren Flugzeugen fest installiert werden kann, ausgebildet sein. Der Notrufsender kann auch in Form eines elektronischen Moduls oder gar einer integrierten Schaltung ausgebildet sein, das bzw. die in ein größeres elektronisches Gerät integriert werden kann.

Mit der vorliegenden Erfindung können Satellitenbasierte SAR-Dienste insbesondere dadurch verbessert werden, dass ein kleinerer Suchbereich im Notfall erhalten wird. Weiterhin kann auch bei einem defekten oder zerstörten Notrufsender eine Alarmierung erfolgen und eine Rettungsaktion initiiert werden, wodurch die Sicherheit der SAR-Dienste wesentlich verbessert werden kann.

### BEZUGSZEICHEN

- 10: Raumsegment
- 12: erster Satellit des Raumsegments
- 14: zweiter Satellit des Raumsegments
- 16: Bodensegment
- 18: Bodenstation
- 20: Positionsmeldung
- 22: Notrufsender
- 24: Dienstgebiet des ersten Satelliten 12
- 26: Dienstgebiet des zweiten Satelliten 14
- 28: Verwaltungssystem für Notrufsender
- 30: Datennachricht des Satelliten 12
- 32: Orbit des Satelliten 12
- 34: nächste Positionsmeldung
- 36: zweiter Notrufsender
- 38: Kommunikationsverbindung zwischen dem ersten Satelliten 12 und der Bodenstation 18
- 40: Kommunikationsverbindung zwischen dem zweiten Satelliten 14 und der Bodenstation 18
- 42: Transceiver
- 44: Positionsermittlungseinheit
- 46: Steuereinheit
- 48: Empfänger für Navigationssignale eines Satellitennavigationssystems
- 50: Prozessor

## Patentansprüche

1. Satellitenbasiertes Search-and-Rescue, SAR, System mit einem Raumsegment (10) mit mehreren Satelliten (12, 14) und einem Bodensegment (16) mit einer oder mehreren Bodenstationen (18), wobei
ein Satellit (12) eine Positionsmeldung (20) von einem Notrufsender (22) in seinem Dienstgebiet (24) empfängt und an eine Bodenstation (18) weiterleitet,
das Bodensegment (16) die mit der letzten Positionsmeldung empfangene Position des Notrufsenders in einem Verwaltungssystem (26) für Notrufsender speichert,
der Notrufsender Positionsmeldungen (21) an den Satelliten derart absendet, dass der Empfang von Positionsmeldungen verschiedener Notrufsender am Satelliten so koordiniert ist, dass zu jedem Zeitpunkt nur Positionsmeldungen ankommen, die hinsichtlich ihrer Signalparameter so unterschiedlich sind, dass ein gleichzeitiger Empfang möglich ist, und
eine Rettungsaktion für den Notrufsender initiiert wird, wenn keine Abschaltnachricht vom Notrufsender empfangen wurde und keine Positionsmeldung vom Notrufsender innerhalb eines vorgegebenen Zeitraums empfangen wird, **dadurch gekennzeichnet, dass** eine Datennachricht (28) mit dem erwarteten Zeitpunkt, zu dem die nächste Positionsmeldung vom Notrufsender an einem Satelliten empfangen werden soll, an den Notrufsender (22) und/oder eine Datennachricht mit mindestens einem Parameter für einen Algorithmus, nach dem einzelne Notrufsender die geplanten Empfangszeitpunkte ihrer Nachrichten an einem Satelliten und die dazu zu verwendenden Signalparameter berechnen können, gleichzeitig an eine Vielzahl von Notrufsendern im Dienstgebiet übertragen wird, und
der Notrufsender (22) anhand der in der empfangenen Datennachricht enthaltenen Informationen die Position des Satelliten ermittelt und mit der Position des Satelliten und seiner eigenen Position berechnet, wann die nächste Positionsmeldung (21) an den Satelliten derart abzusenden ist, dass sie zum erwarteten Zeitpunkt vom Satelliten empfangen wird.

2. System nach Anspruch 1,
**dadurch gekennzeichnet, dass**
ein Notrufsender zum Abschalten eine Abschaltnachricht an das Raumsegment sendet, und nach Empfangen der Abschaltnachricht die Ausbuchung des Notrufsenders aus dem Verwaltungssystem initiiert wird und nach dem Ausbuchen eine Ausbuchungsnachricht über das Raumsegment an den Notrufsender übermittelt wird, der sich nach Empfangen dieser Nachricht abschaltet.

3. System nach Anspruch 1 oder 2,
**dadurch gekennzeichnet, dass**
in einer Datennachricht ferner eine vorgegebene Kodierung enthalten ist, mit der die nächste Positionsmeldung vom Notrufsender empfangen werden soll, wobei die vorgegeben Kodierung insbesondere eine vorgegebene Frequenz, eine vorgegebene Modulation und/oder einen vorgegebenen Nachrichteninhalt aufweist.

4. System nach Anspruch 1, 2 oder 3,
**dadurch gekennzeichnet, dass**
der in einer Datennachricht enthaltene erwartete Zeitpunkt derart bestimmt ist, dass ein die Datennachricht versendender Satellit zum erwarteten Zeitpunkt noch in Empfangsreichweite des Notrufsenders ist.

5. System nach einem der Ansprüche 1 bis 4,
**dadurch gekennzeichnet, dass**
die zeitliche Differenz zwischen dem Aussendezeitpunkt einer Datennachricht und dem in der Datennachricht enthaltenen erwarteten Zeitpunkt höchstens etwa 5 Minuten beträgt, insbesondere kleiner als 5 Minuten ist.

6. System nach einem der vorhergehenden Ansprüche,
**dadurch gekennzeichnet, dass**
das Initiieren einer Rettungsaktion für einen Notrufsender das Übermitteln einer Rettungsnachricht vom Verwaltungssystem an ein Rettungs-Koordinierungszentrum in der Nähe der letzten im Verwaltungssystem gespeicherten Position des Notrufsenders aufweist.

7. Notrufsender (22) für ein Satellitenbasiertes Search-and-Rescue, SAR, System gemäß einem der vorhergehenden Ansprüche, mit einem Transceiver (42) zum Senden und Empfangen von Nachrichten an bzw. von Satelliten des Raumsegments des Search-and-Rescue, SAR, Systems,
einer Positionsermittlungseinheit (44) zum Ermitteln der aktuellen Position des Notrufsenders, und
einer Steuereinheit (46) zum Erzeugen und Versenden von Positionsmeldungen über den Transceiver und Empfangen und Verarbeiten von Datennachrichten an bzw. von Satelliten des Raumsegments des Search-and-Rescue, SAR, Systems **dadurch gekennzeichnet, dass**
die Steuereinheit (46) derart ausgebildet ist, dass sie anhand der in einer empfangenen Datennachricht enthaltenen Informationen, die einen erwarteten Zeitpunkt, zu dem die nächste Positionsmeldung vom Notrufsender an einem Satelliten empfangen werden soll, enthalten, die Position des Satelliten ermittelt, der die Datennachricht versendet hat, und mit der Position des Satelliten und der aktuellen Position des Notrufsenders berechnet, wann die nächste Positionsmeldung an den Satelliten derart abzusenden ist, dass sie zum erwarteten Zeitpunkt vom Satelliten empfangen wird, und zum berechneten Zeitpunkt die nächste Positionsmeldung mit der dann aktuellen Position des Notrufsenders an den Satelliten über den Transceiver aussendet.

8. Notrufsender nach Anspruch 7,
**dadurch gekennzeichnet, dass**
die Positionsermittlungseinheit einen Empfänger (48) für Navigationssignale eines Satellitennavigationssystems und einen Prozessor (50) zum Berechnen der aktuellen Position aus empfangen Navigationssignalen aufweist.

9. Notrufsender nach Anspruch 7, oder 8,
**dadurch gekennzeichnet, dass**
die Steuereinheit (46) derart ausgebildet ist, dass sie anhand der in einer empfangenen Datennachricht enthaltenen vorgegeben Kodierung, mit der die nächste Positionsmeldung vom Notrufsender empfangen werden soll, steuert, wie die nächste Positionsmeldung an einen Satelliten versendet wird, wobei die vorgegeben Kodierung insbesondere eine vorgegebene Frequenz, eine vorgegebene Modulation und/oder einen vorgegebenen Nachrichteninhalt aufweist und die Steuereinheit die Frequenz, Modulation bzw. den Nachrichteninhalt der zu versendenden nächsten Positionsmeldung entsprechend der Vorgabe steuert.

## Claims

1. A satellite-based search and rescue (SAR) system comprising a space segment (10) with a plurality of satellites (12, 14) and a ground segment (16) with one or a plurality of ground stations (18), wherein
a satellite (12) receives a position report (20) from an emergency transmitter (22) in its service area (24) and forwards it to a ground station (18),
the ground segment (16) stores the position of the emergency transmitter received with the last position report in a management system (26) for emergency transmitters,
the emergency transmitter sends position reports (21) to the satellite such that the reception of position reports from various emergency transmitters at the satellite is coordinated such that at any time only position reports arrive that differ with regard to their signal parameters such that simultaneous reception is possible, and
a rescue operation is initiated for the emergency transmitter if no deactivation message has been received from the emergency transmitter and no position report is received from the emergency transmitter within a specified period, **characterized in that** a data message (28) with an expected time at which a next position report from the emergency transmitter is to be received at a satellite is transmitted to the emergency transmitter (22), and/or a data message with a least one parameter for an algorithm, according to which the individual emergency transmitters can calculate the planned receipt times of their messages at the satellite and the signal parameters used for this purpose, is transmitted simultaneously to a multiplicity of emergency transmitters in the service area, and
the emergency transmitter (22) determines the position of the satellite based on the information contained in the received data message and, with the position of the satellite and its own position, calculates when the next position report (21) is to be sent to the satellite such that said position report is received by the satellite at the expected time.

2. The system according to claim 1,
**characterized in that**
an emergency transmitter, for deactivating, sends a deactivation message to the space segment, and after receiving the deactivation message, the logout of the emergency transmitter from the management system is initiated, and after logging out, a logout message is transmitted via the space segment to the emergency transmitter which deactivates after receiving this message.

3. The system according to claim 1 or 2,
**characterized in that**
a specified coding is also included in a data message with which the next position report from the emergency transmitter is to be received, wherein the specified coding comprises in particular a specified frequency, a specified modulation and/or a specified message content.

4. The system according to claim 1, 2 or 3,
**characterized in that**
the expected time included in the data message is determined such that at the expected time, a satellite sending the data message is still within the reception range of the emergency transmitter.

5. The system according to one of claims 1 to 4,
**characterized in that**
the time difference between the time of sending a data message and the expected time included in the data message is at most around 5 minutes, in particular less than 5 minutes.

6. The system according to one of the preceding claims,
**characterized in that**
initiating a rescue operation for an emergency transmitter comprises transmitting a rescue message from the management system to a rescue coordination center in the vicinity of the emergency transmitter's position last stored in the management system.

7. An emergency transmitter (22) for a satellite-based search and rescue (SAR) system according to one of the preceding claims, comprising a transceiver (42) configured to send and receive messages to or from satellites of the space segment of the search and rescue (SAR) system,
a position determining unit (44) configured to determine the actual position of the emergency transmitter, and
a control unit (46) configured to generate and send position reports via the transceiver and configured to receive and process data messages at and from, respectively, satellites of the space segment of the search and rescue (SAR) system,
**characterized in that**
the control unit (46) is configured such that it determines, based on the information contained in a received data message, said information containing an expected time at which the next position report is to be received from the emergency transmitter at a satellite, the position of the satellite which has sent the data message, and calculates with the position of the satellite and the actual position of the emergency transmitter when the next position report is to be sent to the satellite such that it is received by the satellite at the calculated time, and sends at the calculated time the next position report with the now actual position of the emergency transmitter via the transceiver to the satellite.

8. The emergency transmitter according to claim 7,
**characterized in that**
the position determining unit comprises a receiver (48) for navigation signals of a satellite navigation system, and a processor (50) which is configured to calculate the actual position from the received navigation signals.

9. The emergency transmitter according to claim 7 or 8,
**characterized in that**
the control unit (46) is configured such that based on the specified coding included in the received data, with which the next position report from the emergency transmitter is to be received, it controls how the next position report is sent to a satellite, wherein the specified coding comprises in particular a specified frequency, a specified modulation and/or a specified message content, and it controls, according to the specification, the frequency, the modulation and/or the message content of the next position report to be sent.

## Revendications

1. Système de recherche et de sauvetage SAR (Search-and-Rescue) basé sur satellites, présentant un segment spatial (10) constitué de plusieurs satellites (12, 14) et un segment sol (16) constitué d'une ou plusieurs stations terrestres (18),
un satellite (12) recevant un message de position (20) émis par un émetteur d'appel de détresse (22) dans sa zone de service (24) et transmettant ce message à une station terrestre (18),
ce segment sol (16) enregistrant dans un système de gestion (26) d'émetteurs d'appel de détresse la position de l'émetteur d'appel de détresse reçue lors de l'envoi du dernier message de position,
l'émetteur d'appel de détresse émettant des messages de position (21) aux satellites de telle sorte que la réception des messages de position émis par différents émetteurs d'appel de détresse s'effectue de manière coordonnée pour qu'à tout moment, les seuls messages de position entrants soient ceux qui sont suffisamment différents du point de vue de leurs paramètres de signal pour qu'une réception simultanée soit possible, et
qu'une intervention de sauvetage soit déclenchée pour l'émetteur d'appel de détresse si aucun message de coupure n'a été reçu de la part de l'émetteur d'appel de détresse et si aucun message de position n'est reçu depuis l'émetteur d'appel de détresse pendant un laps de temps prédéterminé, **caractérisé en ce qu'**au moment attendu où doit s'effectuer la réception par un satellite du prochain message de position de l'émetteur d'appel de détresse, est transmis un message de données (28) à l'émetteur d'appel de détresse et/ou est transmis simultanément à un grand nombre d'émetteurs d'appel de détresse dans la zone de service un message de données comportant au moins un paramètre algorithmique, après que différents émetteurs d'appel de détresse ont pu calculer les moments prévus pour la réception de leur message par le satellite et les paramètres de signal à utiliser pour ce faire, et
**en ce que** l'émetteur d'appel de détresse (22) calcule, à partir des données contenues dans le message de données reçu, la position du satellite, et à partir de cette dernière et de sa propre position, quand doit être envoyé aux satellites le message de position (21) pour que celui-ci soit reçu par les satellites au moment attendu.

2. Système selon la revendication 1,
**caractérisé en ce qu'**un émetteur d'appel de détresse envoie au segment spatial un message de coupure pour sa mise hors circuit, qu'après réception du message de coupure, est ensuite déclenchée la coupure de l'émetteur d'appel de détresse du système de gestion, et qu'après cette coupure, un message de mise hors circuit est transmis via le segment spatial à l'émetteur d'appel de détresse qui se met à son tour hors circuit après avoir reçu ce message.

3. Système selon la revendication 1 ou 2 ,
**caractérisé en ce qu'**un message de données contient un codage prédéterminé par l'intermédiaire duquel doit s'opérer la réception du prochain message de position de l'émetteur d'appel de détresse, ce codage présentant plus particulièrement une fréquence, une modulation et/ou un contenu de message prédéterminés.

4. Système selon la revendication 1, 2 ou 3,
**caractérisé en ce que** le moment attendu contenu dans un message de données est déterminé de telle sorte qu'un satellite qui envoie le message de données se trouve encore à portée de réception de l'émetteur d'appel de détresse, au moment attendu.

5. Système selon les revendications 1 à 4,
**caractérisé en ce que** la différence de temps entre le moment d'émission d'un message de données et le moment attendu contenu dans le message de données est tout au plus égale à environ 5 minutes, plus particulièrement inférieure à 5 minutes.

6. Système selon l'une des revendications précédentes,
**caractérisé en ce que** le déclenchement d'une intervention de sauvetage pour un émetteur d'appel de détresse comprend la transmission d'un message de sauvetage par le système de gestion à un centre de coordination de sauvetage situé à proximité de la dernière position de l'émetteur d'appel de détresse enregistrée dans le système de gestion.

7. Emetteur d'appel de détresse (22) pour système de recherche et de sauvetage SAR basé sur satellites selon l'une des revendications précédentes, comprenant un émetteur-récepteur (42) pour émettre et recevoir des messages envoyés vers et reçus par des satellites constituant le segment spatial du système de recherche et de sauvetage SAR,
une unité de calcul de position (44) pour déterminer la position actuelle de l'émetteur d'appel de détresse, et
une unité de commande (46) pour créer et envoyer des messages de position par l'intermédiaire de l'émetteur-récepteur ainsi que pour recevoir et traiter des messages de données parvenant aux et provenant des satellites constituant le segment spatial du système de recherche et de sauvetage SAR, **caractérisé en ce que**
l'unité de commande (46) est conçue pour qu'à partir des données contenues dans un message de données reçu et contenant un moment attendu où doit s'effectuer la réception du prochain message de position envoyé à un satellite par l'émetteur d'appel de détresse, elle calcule la position du satellite qui a envoyé le message de données, et à partir de celle-ci et de la position actuelle de l'émetteur d'appel de détresse, quand doit être envoyé aux satellites le prochain message de position pour que celui-ci soit reçu par les satellites au moment attendu et qu'au moment calculé, le prochain message de position comportant alors la position actuelle de l'émetteur d'appel de détresse soit envoyé aux satellites par le biais de l'émetteur-récepteur.

8. Emetteur d'appel de détresse (22) selon la revendication 7,
**caractérisé en ce que**
l'unité de calcul de position présente un récepteur (48) de signaux de navigation provenant d'un système de navigation par satellite et un processeur (50) pour calculer la position actuelle à partir des signaux de navigation reçus.

9. Emetteur d'appel de détresse (22) selon la revendication 7 ou 8,
**caractérisé en ce que**
l'unité de commande (46) est réalisée de telle sorte qu'à partir du codage prédéterminé contenu dans un message de données reçu et par l'intermédiaire duquel doit s'effectuer la réception du prochain message de position de l'émetteur d'appel de détresse, elle commande la manière dont le prochain message de position est envoyé à un satellite, le codage prédéterminé présentant plus particulièrement une fréquence, une modulation et/ou un contenu de message prédéterminés, et l'unité de commande commandant la fréquence, la modulation et le contenu du prochain message de position à envoyer en fonction des données.
